# FASCICULE DE BREVET EUROPEEN

(11) **EP 2 895 807 B1**
(45) Date de publication et mention de la délivrance du brevet: **19.04.2017**
(21) Numéro de dépôt: 13774742.4
(22) Date de dépôt: 11.09.2013
(51) Int. Cl.: F25C 3/04, F16K 31/12, F16K 3/30

(54) **DISPOSITIF POUR LA FABRICATION DE NEIGE DE CULTURE, INSTALLATION D'ENNEIGEMENT COMPRENANT UN TEL DISPOSITIF ET PROCÉDÉ DE FONCTIONNEMENT D'UN TEL DISPOSITIF**
VORRICHTUNG ZUR ERZEUGUNG VON KUNSTSCHNEE, SCHNEEDECKENANLAGE MIT EINER SOLCHEN VORRICHTUNG UND VERFAHREN ZUM BETREIBEN EINER SOLCHEN VORRICHTUNG
DEVICE FOR PRODUCING ARTIFICIAL SNOW, SNOW COVER FACILITY COMPRISING SUCH A DEVICE, AND METHOD FOR THE OPERATION OF SUCH A DEVICE

(30) Priorité: 11.09.2012 FR 1258523
(43) Date de publication de la demande: 22.07.2015
(73) Titulaire: Technoalpin France, 69570 Dardilly (FR)
(72) Inventeur: MENEUVRIER, Matthieu, F-85000 La Roche Sur Yon (FR); DAVID, Eric, F-44119 Treillieres (FR); GALVIN, Michel, F-44470 Carquefou (FR)
(74) Mandataire: Jacobacci Coralis Harle
(86) Numéro de dépôt international: PCT/FR2013/052091
(87) Numéro de publication internationale: WO 2014/041302

(56) Documents cités:
- EP-A1- 1 790 891
- WO-A1-02/061516
- FR-A1- 2 877 076
- FR-A1- 2 950 124
- GB-A- 1 457 946

## Description

### DOMAINE TECHNIQUE AUQUEL SE RAPPORTE L'INVENTION

La présente invention concerne de manière générale la fabrication de neige de culture, encore appelée neige artificielle.

Elle concerne en particulier un dispositif pour la fabrication de neige de culture, comprenant un corps comportant : - un conduit d'alimentation en eau sous pression et un conduit d'alimentation en air sous pression, - au moins un élément de pulvérisation d'eau ou d'un mélange d'air et d'eau, - au moins une vanne de commande pour le réglage de l'alimentation en eau sous pression et/ou en air sous pression dudit élément de pulvérisation, et - des moyens de pilotage, en forme d'arbre à came(s), destinés à piloter ladite vanne de commande.

L'invention concerne également une installation d'enneigement comprenant ce dispositif de fabrication de neige de culture, ainsi qu'un procédé de fonctionnement d'un tel dispositif.

### ARRIERE-PLAN TECHNOLOGIQUE

Les pistes de ski sont aménagées pour accueillir notamment de la neige naturelle, par exemple pour la pratique du ski alpin ou de ski de fond.

De manière générale, il est connu de fabriquer de la neige de culture pour la disposer sur les pistes de ski afin de pallier des défauts de présence de neige naturelle.

Dans ce cas, on installe sur au moins une partie des bords des pistes de ski, des enneigeurs alimentés par des canalisations d'eau sous pression et par des canalisations d'air sous pression pour permettre la production de cette neige de culture.

Très généralement, un tel enneigeur comprend une perche fixée solidement dans le sol.

Cette perche achemine, via des conduits d'alimentation distincts, de l'air sous pression et de l'eau sous pression jusqu'à une tête d'enneigement située à son extrémité libre, à plusieurs mètres voire une dizaine de mètres de hauteur.

Cette tête d'enneigement comprend - une pluralité de buses de pulvérisation d'eau, - éventuellement au moins une buse de pulvérisation d'un mélange d'air et d'eau, formant dispositif nucléateur, et - une pluralité de vannes qui assurent le réglage de l'alimentation en eau sous pression et éventuellement en air sous pression de ces buses de pulvérisation, afin d'optimiser la quantité de neige de culture à produire en fonction des conditions météorologiques.

Il existe des enneigeurs dont les vannes à tiroir sont disposées au pied de la perche. Ainsi, pour de tels enneigeurs, il est nécessaire d'évacuer et/ou de chauffer un volume important d'eau, stocké notamment dans le mat et les buses de pulvérisation, afin d'éviter une détérioration de l'enneigeur par un gel de l'eau en présence.

On connaît par ailleurs du document FR-2 877 076 un enneigeur dont les vannes à tiroir sont disposées dans la tête d'enneigement à des niveaux différents, et sont chacune pilotées par un moyen de commande électromagnétique disposé à l'arrière de ces vannes à tiroir.

Cependant, cette tête d'enneigement présente l'inconvénient d'être complexe de par le nombre important de pièces qui la constituent, en particulier concernant les moyens de commande électromagnétique. Elle présente également un poids important pour lequel la perche doit résister. En outre, un tel enneigeur est sujet aux dysfonctionnements, nécessitant alors des opérations de maintenance préventive et/ou curative importantes et régulières.

De plus, chaque moyen de commande électromagnétique consomme une quantité d'énergie électrique importante pour permettre la production de neige de culture par la tête d'enneigement.

On connait encore du document EP- 1 790 891 un dispositif pour pulvériser de l'eau et/ou de l'air sous pression afin de fabriquer de la neige de culture.

Ce dispositif comporte des vannes d'ajustement du flux de fluide, qui sont commandées chacune par une came portée par un arbre à cames motorisé.

Ces vannes ont une structure allongée dont l'une des extrémités est agencée en regard d'une arrivée axiale de fluide (soit de l'eau soit de l'air), et dont l'autre extrémité est commandée par la came associée, pour ajuster la délivrance du flux de fluide par une sortie latérale.

Ce type de structure nécessite la présence de vannes dédiées chacune à la gestion d'un fluide unique et s'avère relativement complexe.

### OBJET DE L'INVENTION

Afin de remédier aux inconvénients précités de l'état de la technique, la présente invention propose un dispositif pour la fabrication de neige de culture, de structure simple, qui est léger, simple d'utilisation, fiable et peu couteux.

Ce dispositif permet en outre un réglage fin de la course de la ou des vannes en présence.

Plus particulièrement, il est proposé selon l'invention un dispositif pour la fabrication de neige de culture du type comprenant un corps comportant :
- un conduit d'alimentation en eau sous pression
- un conduit d'alimentation en air sous pression,
- au moins un élément de pulvérisation d'eau ou d'un mélange d'air et d'eau,
- au moins une vanne de commande pour le réglage de l'alimentation en eau sous pression et/ou en air sous pression dudit élément de pulvérisation, et
- des moyens de pilotage destinés à piloter ladite vanne de commande, lesquels moyens de pilotage comprennent un arbre à came(s) entrainé en rotation autour de son axe longitudinal par un actionneur, ladite vanne de commande coopérant avec une came portée par ledit arbre à came(s);
Et ce dispositif est caractérisé par le fait que ladite vanne de commande est placée sur ledit conduit d'alimentation en eau sous pression et sur ledit conduit d'alimentation en air sous pression, et comporte sur une partie de son pourtour, au moins une chambre d'eau destinée à être alimentée en eau sous pression par ledit conduit d'alimentation en eau sous pression, et au moins une chambre d'air destinée à être alimentée en air sous pression par ledit conduit d'alimentation en air sous pression, laquelle vanne de commande comprend un corps fixe en forme générale de tube délimitant un logement interne dans lequel est logé un corps mobile, qui est mobile en translation selon un axe de translation s'étendant perpendiculairement à l'axe longitudinal dudit arbre à came(s).

D'autres caractéristiques non limitatives et avantageuses du dispositif conforme à l'invention sont les suivantes :
- le corps du dispositif comprend au moins deux vannes de commande qui sont chacune disposées à des niveaux différents dudit conduit d'alimentation en air sous pression et dudit conduit d'alimentation en eau sous pression ; et ces vannes de commande sont chacune pilotées par une came agencée sur l'arbre à came(s) desdits moyens de pilotage.
- le dispositif comporte au moins un élément de pulvérisation en forme de dispositif de nucléation alimenté en eau sous pression par ledit conduit d'alimentation en eau sous pression et alimenté en air sous pression par ledit conduit d'alimentation en air sous pression.
- le dispositif comporte au moins un élément de pulvérisation en forme de buse de pulvérisation d'eau.
- le dispositif comporte au moins deux éléments de pulvérisation, l'un en forme de buse de pulvérisation d'eau, et l'autre en forme de dispositif de nucléation, lequel dispositif de nucléation est disposé en aval de ladite buse de pulvérisation d'eau, par rapport audit conduit d'alimentation en eau sous pression, et au moins ladite buse de pulvérisation d'eau étant alimentée en eau ou en air par l'intermédiaire d'une vanne de commande.
- au moins l'une des cames présente un profil tel que la vanne de commande avec laquelle ladite came coopère est mobile entre au moins deux positions : a/l'une autorisant l'alimentation en eau sous pression et éventuellement en air sous pression de l'élément de pulvérisation associé, et b/l'autre interdisant l'alimentation en eau sous pression et éventuellement en air sous pression dudit élément de pulvérisation;
dans ce cas, ledit élément de pulvérisation comprend avantageusement au moins une buse de pulvérisation d'eau, lesdites première et deuxième positions autorisant et interdisant respectivement l'alimentation en eau sous pression de ladite buse de pulvérisation d'eau ; en outre ladite came présente avantageusement un profil tel que ladite vanne de commande avec laquelle elle coopère est mobile jusqu'à une troisième position, différente desdites première et deuxième positions, autorisant l'alimentation en air sous pression de ladite buse de pulvérisation d'eau ;
- le profil d'au moins deux cames est tel que les vannes de commande associées aux buses de pulvérisation d'eau, sont adaptées pour, selon une même position de l'arbre à came(s), être dans des positions différentes entre elles ;
- le dispositif comporte au moins une vanne de commande agencée pour permettre une purge d'eau de l'une au moins des buses de pulvérisation d'eau, par de l'air sous pression provenant dudit conduit d'alimentation en air sous pression.
- le corps de la tête d'enneigement comprend des moyens de rappel de chaque vanne de commande vers une position dans laquelle une extrémité libre de chacune desdites vannes, en regard d'une came associée, assure un appui contre ladite came en regard ; dans ce cas, les moyens de rappel en question sont avantageusement formés par l'air sous pression circulant dans le conduit d'alimentation en air sous pression, par exemple, une alimentation d'air d'un dispositif de nucléation ; et
- l'actionneur comprend un moteur bidirectionnel qui entraine en rotation ledit arbre à came(s), lequel moteur est associé à des moyens de contrôle de vitesse et de contrôle de position de l'arbre à came(s).

L'invention propose également une installation d'enneigement qui comprend une perche, et un dispositif tel que défini ci-dessus agencé à une extrémité libre de cette perche.

L'invention propose en outre un procédé de fonctionnement d'un dispositif conforme à l'invention ou d'une installation d'enneigement selon l'invention, l'élément de pulvérisation comprenant au moins une buse de pulvérisation d'eau, dans lequel sont mises en oeuvre les étapes suivantes :
a) on pilote ledit arbre à came(s) pour autoriser l'alimentation en eau sous pression de ladite buse de pulvérisation d'eau via ladite vanne de commande associée,
b) on pilote ledit arbre à came(s) dans un premier sens de rotation pour interdire l'alimentation en eau sous pression de ladite buse de pulvérisation d'eau,
c) on pilote ledit arbre à came(s) toujours dans ledit premier sens de rotation pour autoriser l'alimentation en air sous pression de ladite buse de pulvérisation d'eau, de manière à assurer l'évacuation de l'eau sous pression de ladite buse de pulvérisation d'eau, puis,
d) on pilote ledit arbre à came(s) encore dans ledit premier sens de rotation, pour interdire l'alimentation en air sous pression (et avantageusement en eau sous pression) de ladite buse de pulvérisation d'eau.

Avantageusement, grâce à ce procédé la buse de pulvérisation est purgée par de l'air sous pression avant d'être fermée. Ainsi, une telle buse de pulvérisation est dépourvue de gouttelettes d'eau pouvant l'endommager ou la boucher lorsque cette eau se transforme en glace.

L'invention propose plus particulièrement un procédé de fonctionnement qui comprend avantageusement l'étape additionnelle selon laquelle, suite à la succession d'étapes a), b), c), et d), on pilote ledit arbre à came(s) dans un deuxième sens de rotation, opposé audit premier sens de rotation, de manière à réaliser successivement les étapes d), c), b) puis a), en vue de remettre en fonctionnement la buse de pulvérisation.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue schématique de face d'un premier mode de réalisation d'un dispositif pour la fabrication de neige de culture conforme à l'invention ;
- la figure 2 est une vue schématique en coupe du dispositif de la figure 1 selon le plan A1-A1 ;
- la figure 3 montre l'arbre à came équipant le dispositif des figures 1 et 2, vu de manière schématique et en perspective ;
- la figure 4 est une vue schématique en coupe de l'arbre à came de la figure 3 montrant le profil de sa came ;
- les figures 5 à 9 sont des vues schématiques en coupe du dispositif des figures 1 et 2, selon le plan B1-B1 de la figure 1, représentant chacune la came de l'arbre à came, dans différentes positions angulaires pour la manoeuvre de la vanne associée, en vue de l'alimentation en eau sous pression et éventuellement en air sous pression des buses de pulvérisation associées ;
- la figure 10 est une vue schématique analogue à celle de la figure 1, d'un deuxième mode de réalisation d'un dispositif pour la fabrication de neige de culture conforme à l'invention ;
- la figure 11 est une vue schématique en coupe du dispositif de la figure 10 selon le plan A2-A2 ;
- la figure 12 montre l'arbre à cames du dispositif de la figure 11, vu de manière schématique et en perspective ;
- les figures 13 à 17 sont des vues schématiques en coupe du dispositif de la figure 10 selon le plan B2-B2, présentant chacune une même came de l'arbre à cames, dans différentes positions angulaires, pour la manoeuvre de la vanne associée, en vue de l'alimentation en eau sous pression et éventuellement en air sous pression des buses de pulvérisation associées ;
- les figures 18 à 20 sont des vues schématiques en coupe de l'arbre à cames de la figure 12 représentant respectivement de profil chacune des cames de l'arbre à cames ;
- la figure 21 est une vue schématique en coupe de l'arbre à cames de la figure 12 représentant de profil les cames superposées ;
- les figures 22 et 23 sont des vues schématiques analogues à celle de la figure 3 représentant, respectivement, un troisième et un quatrième mode de réalisation d'un arbre à cames destiné à équiper un dispositif conforme à l'invention ; et
- la figure 24 est une vue schématique en coupe, analogue à celle de la figure 11, représentant un dispositif selon l'invention équipé de l'arbre à cames représenté sur la figure 23.

En préliminaire, on notera que d'une figure à l'autre, les éléments identiques ou similaires des différents modes de réalisation de l'invention seront, dans la mesure du possible, référencés par les mêmes signes de référence et ne seront pas décrits à chaque fois.

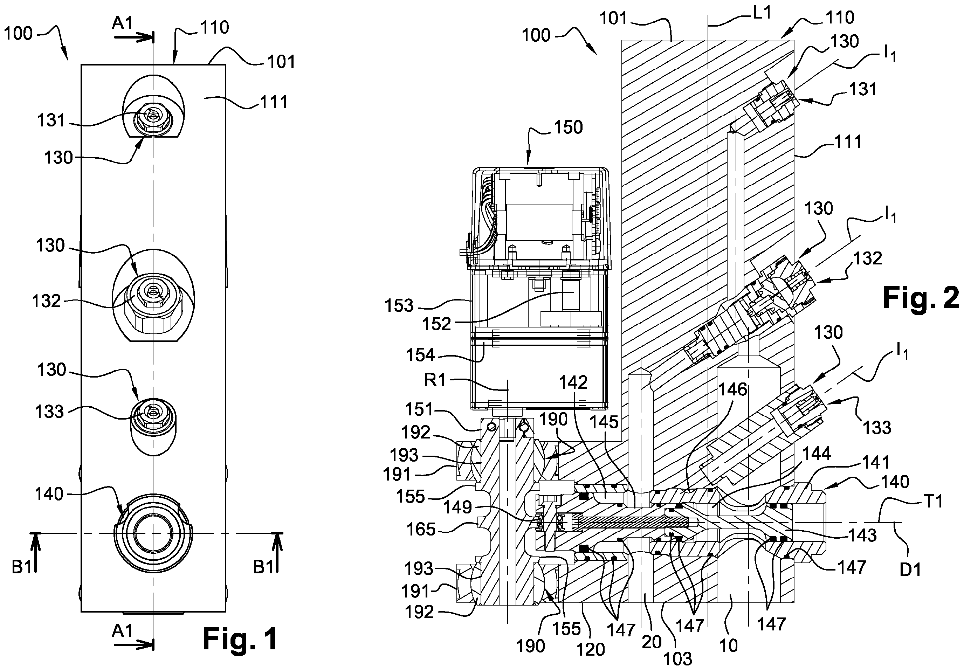

Sur les figures 1 à 21, on a représenté deux modes de réalisation d'un dispositif 100 ; 200 pour la fabrication de neige de culture conforme à l'invention.

Ces dispositifs 100 ; 200 pour la fabrication de neige de culture, tels que représentés de manière générale sur ces figures 1 à 21, sont particulièrement adaptés pour équiper une installation d'enneigement qui comprend notamment une perche (non représentée).

Dans le cas d'une telle installation d'enneigement, la perche étant fixée à une extrémité dans le sol, elle comprend une extrémité libre en hauteur sur laquelle est agencé le dispositif 100 ; 200 de fabrication de neige de culture.

Ainsi, ces dispositifs 100 ; 200 surplombent la piste de ski d'une dizaine de mètres et sont nommés « tête d'enneigement » par la suite.

Cette installation d'enneigement est alimentée en eau sous pression et en air sous pression par des lignes d'alimentation (non représentées) s'étendant notamment le long de la piste. Ces lignes d'alimentation comportent des canalisations (non représentées) permettant le transport d'air sous pression et d'eau sous pression jusqu'à chaque installation d'enneigement pour l'alimentation en eau sous pression ou en air sous pression de la tête d'enneigement 100 ; 200 associée.

Ces lignes d'alimentation en eau et en air comportent également des vannes générales de fermeture (non représentées), aménagées généralement au pied de chaque perche, permettant de fermer ou d'ouvrir l'alimentation en air sous pression et en eau sous pression respectivement d'un conduit d'alimentation 10 en eau sous pression et d'un conduit d'alimentation 20 en air sous pression agencés dans un corps 101 ; 201 de la tête d'enneigement 100 ; 200.

L'eau sous pression et l'air sous pression sont acheminés de manière classique, via des canalisations appropriées au sein de la perche, depuis les vannes générales de fermeture jusqu'aux conduits d'alimentation 10, 20 en eau sous pression et en air sous pression du corps 101 ; 201 de la tête d'enneigement 100 ; 200.

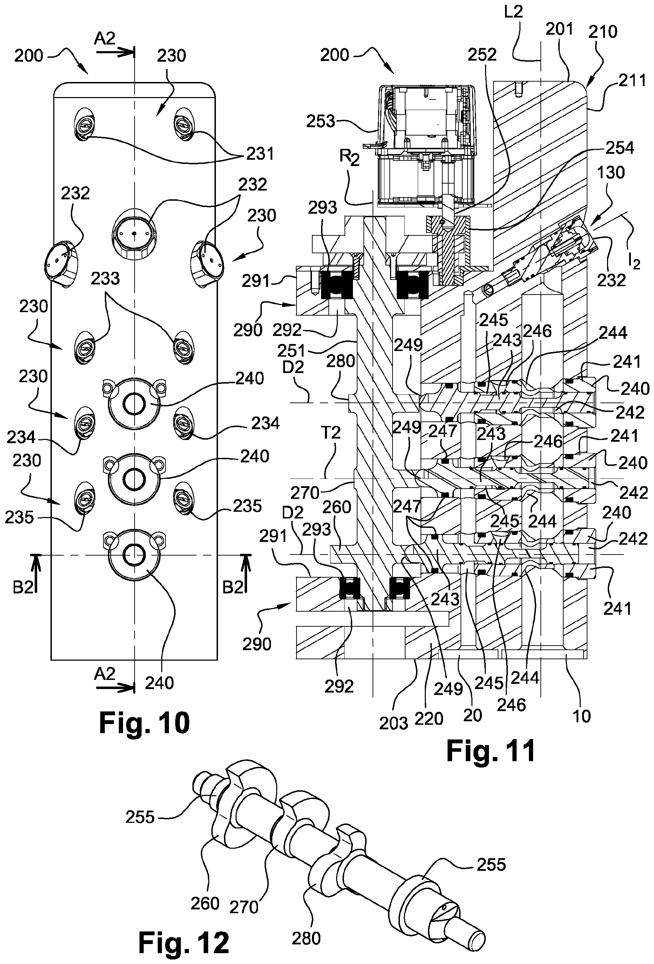

Dans chacun des modes de réalisation de l'invention représentés sur les figures 1 à 21, le corps 101 ; 201 de la tête d'enneigement 100 ; 200 présente ici une section de profil général en « L » qui définit, d'une part, une branche supérieure 110 ; 210 qui s'étend selon un axe longitudinal L1 ; L2, avantageusement vertical ou au moins approximativement vertical une fois en position sur la perche, et, d'autre part, une branche inférieure 120 ; 220 qui s'étend selon un axe transversal T1 ; T2 perpendiculaire à l'axe longitudinal L1 ; L2 et avantageusement horizontal ou au moins approximativement horizontal (figures 2 et 11).

Chaque corps 101 ; 201 comprend des éléments de pulvérisation 130 ; 230 adaptés à pulvériser de l'eau ou un mélange d'air et d'eau.

Ces éléments de pulvérisation 130 ; 230 se composent ici - de buses de pulvérisation d'eau 131, 133 ; 231, 233, 234, 235 pulvérisant de l'eau sous pression, et - d'au moins un dispositif de nucléation 132 ; 232, pulvérisant un mélange d'eau et d'air sous pression.

Comme détaillé plus loin, certaines de ces buses de pulvérisation d'eau 133 ; 233, 234, 235 peuvent être purgées par de l'air sous pression.

Ces éléments de pulvérisation 130 ; 230 présentent chacun une section dont le profil est sensiblement circulaire, et s'étendant ici chacun selon un axe incliné ascendant I1 ; I2 par rapport à l'axe transversal T1 ; T2 de la branche inférieure 120 ; 220.

Les axes inclinés I1 ; I2 forment ici un angle avec l'axe transversal T1 ; T2 compris entre 30 degrés et 45 degrés, préférentiellement égal ici à 35 degrés.

Les éléments de pulvérisation 130 ; 230 sont ici agencés dans des cavités prévues à cet effet dans la branche supérieure 110 ; 210 du corps 101 ; 201.

Ces éléments de pulvérisation 130 ; 230 sont ici agencés sur une même face avant 111 ; 211 de la branche supérieure 110 ; 210. Cette face avant 111 ; 211 est ici opposée à la branche inférieure 120 ; 220 du corps 101 ; 201.

Ainsi, ces éléments de pulvérisation 130 ; 230 présentent chacun une extrémité libre par laquelle est propulsée de l'eau sous pression pour les buses de pulvérisation d'eau 131, 133 ; 233, 234, 235, ou un mélange d'eau et d'air sous pression pour les dispositifs de nucléation 132 ; 232.

Du côté opposé à cette extrémité libre, ces éléments de pulvérisation 130 ; 230 sont connectés soit seulement au conduit 10 en eau sous pression, soit aux conduits 10 et 20 en eau sous pression et en air sous pression.

Les conduits d'alimentation 10, 20 en eau sous pression et en air sous pression s'étendent chacun selon un axe parallèle à l'axe longitudinal L1 ; L2 de manière, d'une part, à alimenter les éléments de pulvérisation 130 ; 230, et, d'autre part, à être connectés à la perche par une face inférieure 103 ; 203 du corps 101 ; 201.

Le corps 101 ; 201 de la tête d'enneigement 100 ; 200 comprend par ailleurs au moins une vanne de commande 140 ; 240 pour le réglage de l'alimentation en eau sous pression ou en air sous pression d'au moins une buse de pulvérisation d'eau 133 ; 233, 234, 235 équipant les éléments de pulvérisation 130 ; 230.

Ces vannes de commande 140 ; 240 consistent ici en des vannes à tiroir de forme générale cylindrique.

Elles sont, d'une part, agencées dans la branche inférieure 120 ; 220 de telle sorte qu'elles traversent la branche inférieure 120 ; 220 selon l'axe transversal T1 ; T2, et, d'autre part, connectées séparément à chacun des conduits d'alimentation 10, 20 en eau sous pression et en air sous pression.

Chaque vanne de commande 140 ; 240 comprend plus particulièrement un corps fixe 141 ; 241, en forme générale de tube, délimitant un logement interne 142 ; 242 dans lequel est logé un corps mobile 143 ; 243.

Le corps mobile 143 ; 243 est manoeuvrable en translation, par rapport au corps fixe 141 ; 241, selon un axe de translation D1 ; D2 s'étendant parallèlement à l'axe transversal T1 ; T2 de la branche inférieure 120 ; 220 du corps 101 ; 201 du dispositif 100 ; 200.

Le corps fixe 141 ; 241 de chaque vanne de commande 140 ; 240 est ici fixé au corps 101 ; 201 de la tête d'enneigement 100 ; 200 par des moyens de fixation appropriés (non représentés).

Cette vanne de commande 140 ; 240 comprend sur une partie de son pourtour, au moins une chambre d'eau 144 ; 244 destinée à être alimentée en eau sous pression par le conduit d'alimentation 10 en eau sous pression, et, au moins une chambre d'air 145 ; 245 destinée à être alimentée en air sous pression par le conduit d'alimentation 20 en air sous pression.

Ces chambres d'eau 144 ; 244 et d'air 145 ; 245 sont délimitées entre le corps mobile 143 ; 243 et le corps fixe 141 ; 241.

Elles sont ici respectivement soumises en permanence à de l'eau sous pression et à de l'air sous pression dès que les vannes générales de fermeture le permettent.

La chambre d'eau 144 ; 244 est adaptée à alimenter une ouverture d'alimentation 146 ; 246 ménagée traversante dans le corps fixe 141 ; 241, en fonction de la position du corps mobile 143 ; 243 par rapport au corps fixe 141 ; 241 de la vanne de commande 140 ; 240.

Ainsi, le corps mobile 143 ; 243 est mobile entre au moins deux positions par rapport au corps fixe 141 ; 241 de la vanne de commande 140 ; 240, à savoir :
- une première position autorisant l'alimentation en eau sous pression de la buse de pulvérisation 133 ; 233, 234, 235 correspondante, dite position autorisant l'eau, et
- une deuxième position interdisant l'alimentation en eau sous pression de la buse de pulvérisation 133 ; 233, 234, 235 correspondante, dite position interdisant l'eau.

La chambre d'air 145 ; 245 est également adaptée à alimenter l'ouverture d'alimentation 146 ; 246 ménagée dans le corps fixe 141 ; 241, en fonction de la position du corps mobile 143 ; 243 par rapport au corps fixe 141 ; 241 de la vanne de commande 140 ; 240.

Ainsi, le corps mobile 143 ; 243 est mobile en translation, entre au moins deux autres positions par rapport au corps fixe 141 de la vanne de commande 140 ; 240, à savoir :
- une troisième position autorisant l'alimentation en air sous pression de la buse de pulvérisation 133 ; 233, 234, 235 correspondante, dite positon autorisant l'air, et
- une quatrième position interdisant l'alimentation en air sous pression de la buse de pulvérisation 133 ; 233, 234, 235 correspondante, dite position interdisant l'air.

Ces chambres d'eau 144 ; 244 et d'air 145 ; 245 présentent ici chacune une forme de rainure ménagée dans le corps mobile 143 ; 243, s'étendant autour de l'axe de translation D1 ; D2.

Ces chambres d'eau 144 ; 244 et d'air 145 ; 245 sont en plus réparties sur la longueur dudit corps mobile 143 ; 243 : la chambre d'eau 144 ; 244 est ménagée du côté d'une extrémité du corps mobile 143 ; 243, et la chambre d'air 145 ; 245 est ménagée du côté d'une autre extrémité du corps mobile 143 ; 243.

Chaque vanne de commande 140 ; 240 comprend ici des éléments d'étanchéité 147 ; 247 (voir figures 2 et 11) pour assurer l'étanchéité, d'une part, entre le corps 101 ; 201 de la tête d'enneigement 100 ; 200 et le corps fixe 141 ; 241, et, d'autre part, entre le corps fixe 141 ; 241 et le corps mobile 143 ; 243 de la vanne de commande 140 ; 240.

Ces éléments d'étanchéité 147 ; 247 consistent ici en des joints toriques à section circulaire ou rectangulaire, mais on pourrait envisager d'autres types de joints.

La tête d'enneigement 100 ; 200 comprend en outre des moyens de pilotage 150 ; 250 destinés à manoeuvrer la ou les vannes de commande 140 ; 240 de manière à autoriser/interdire l'alimentation en air sous pression ou en eau sous pression de la buse de pulvérisation 133 ; 233, 234, 235 correspondante.

Plus particulièrement, les moyens de pilotage 150 ; 250 sont adaptés à déplacer le corps mobile 143 ; 243 dans le corps fixe 141 ; 241 de la vanne de commande 140 ; 240, selon un mouvement de translation.

Comme on peut le voir sur les figures 2 et 11, les moyens de pilotage 150 ; 250 comprennent un arbre à came(s) 151 ; 251 entrainé en rotation autour de son axe longitudinal R1, R2 par un actionneur 153 ; 253.

Cet arbre à came(s) 151 ; 251 comporte un axe cylindrique sur la longueur duquel sont rapportés un ou plusieurs éléments formant des cames 160; 260, 270, 280. Chaque vanne de commande 140 ; 240, en particulier son corps mobile 143 ; 243, coopère avec la came 160 ou l'une des cames 260, 270, 280 portées par l'arbre à came(s) 151 ; 251.

L'axe de rotation R1 ; R2 consiste ici un axe s'étendant parallèlement, ou au moins approximativement parallèlement, à l'axe longitudinal L1 ; L2.

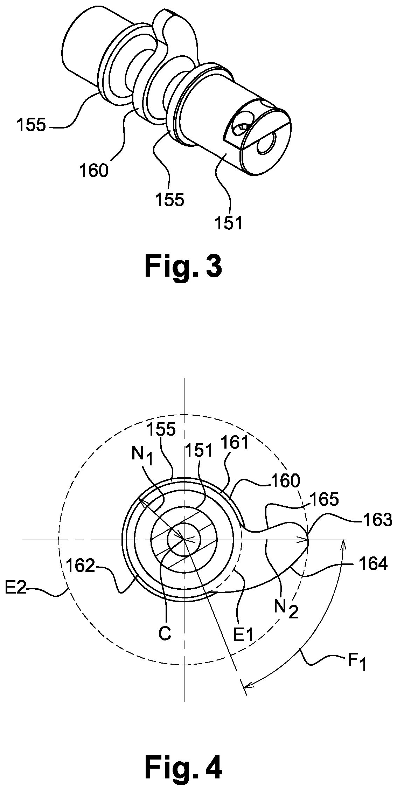

Comme le montrent plus particulièrement les figures 3 et 12, chaque came 160 ; 260, 270, 280 présente un profil (ou un contour) particulier qui est destiné à coopérer avec une extrémité libre 149 ; 249 du corps mobile 143 ; 243.

A cet égard, chaque came 160 ; 260, 270, 280 s'étend dans un plan passant, au moins approximativement, par l'axe de translation D1 ; D2 de la vanne de commande 140 ; 240 associée.

Ainsi, comme développé par la suite, la ou les cames 160 ; 260, 270, 280 portées par l'arbre à came(s) 151 ; 251 sont pilotées en rotation pour la manoeuvre de la ou des vannes de commande 140 ; 240 associées.

L'actionneur 153 ; 253 est du type motoréducteur, comprenant un moteur électrique 153 ; 253 qui entraine en rotation un rotor 152 ; 252. Ce rotor 152 ; 252 entraine un réducteur 154 ; 254 qui entraine lui-même en rotation l'arbre à came(s) 151 ; 251 autour de son axe de rotation R1 ; R2.

Le moteur électrique 153 ; 253 est ici un moteur bidirectionnel, pour permettre la rotation de l'arbre à came(s) 151 ; 251 dans un premier sens de rotation S1 et dans un deuxième sens de rotation S2, inverse l'un par rapport à l'autre, autour de l'axe de rotation R1, R2.

Les moyens de pilotage 150 ; 250 comprennent ici des moyens de contrôle de vitesse et de contrôle de position du mouvement de rotation de l'arbre à came(s) 151 ; 251, associés au moteur 153 ; 253.

Ces moyens contrôle de vitesse et de contrôle de position sont adaptés à contrôler de manière précise la position angulaire de l'arbre à came(s) 151 ; 251 et donc la position en translation du corps mobile 143 ; 243 de la vanne de commande 140 ; 240.

Par ailleurs, le corps 101 ; 201 de la tête d'enneigement 100 ; 200 comprend des moyens de rappel 145 ; 245 qui assurent un maintien de chaque vanne de commande 140 ; 240 selon une position dans laquelle leur extrémité libre 149 ; 249 est en appui contre la came 160 ; 260, 270, 280 en regard.

La chambre d'air 145 ; 245 présente une forme telle qu'elle constitue ici les moyens de rappel 145 ; 245, pour autant qu'elle soit soumise à de l'air sous pression provenant du conduit d'alimentation 20 en air sous pression. La configuration de cette chambre d'air 145 ; 245 est telle qu'en présence d'air sous pression, cet air pousse ici en permanence le corps mobile 143 ; 243 de la vanne de commande 140 ; 240 contre la came 160 ; 260, 270, 280 en regard.

L'air sous pression est ici celui du conduit d'alimentation 20 en air sous pression utilisé pour alimenter un dispositif de nucléation 132 ; 232 (correspondant à une buse de pulvérisation air/eau sous pression, bien connue de l'homme du métier, pour la formation de microbilles de glace destinées à favoriser la production de cristaux de glace par les buses de pulvérisation d'eau associées).

En variante, on pourrait envisager des moyens de rappel formés par de l'air spécifiquement dédié à cette fonction, par de l'eau sous pression circulant dans le conduit d'alimentation en eau sous pression, ou encore par des moyens mécaniques de rappel formés par un ressort, par exemple un ressort de compression.

La pression de l'eau est ici comprise entre 12 bar et 100 bar et la pression de l'air est ici comprise entre 2 bar et 10 bar.

Selon le premier mode de réalisation représenté sur les figures 1 à 9, le corps 101 de la tête d'enneigement 100 comprend trois éléments de pulvérisation 130.

Ces éléments de pulvérisation 130 sont agencés de telle sorte que, dans le corps 101 du dispositif 100, chaque axe incliné I1 soit compris dans le plan A1-A1 de la figure 1.

L'un des éléments de pulvérisation 130 est formé par une première buse de pulvérisation 131 agencée à proximité de l'extrémité libre de la branche supérieure 110. Cette première buse de pulvérisation 131 est destinée à pulvériser de l'eau sous pression pour fabriquer de la neige de culture.

Un autre des éléments de pulvérisation 130 est formé par un dispositif de nucléation 132 agencé sensiblement au milieu de la branche supérieure 120 du corps 101 de la tête d'enneigement 100. Il est ici destiné à pulvériser un mélange d'air et d'eau sous pression.

La première buse de pulvérisation d'eau 131 et le dispositif de nucléation 132 sont ici chacun alimentés en direct. En d'autres termes, ils sont dépourvus d'un pilotage de leur alimentation en eau sous pression et en air sous pression par une vanne de commande 140 telle que précitée.

Un dernier élément de pulvérisation 130 est formé par une deuxième buse de pulvérisation d'eau 133 et dont l'alimentation est contrôlée par une vanne de commande 140 telle que décrite précédemment.

Comme le montrent plus particulièrement les figures 2 et 4, l'arbre à came 151 comprend une unique came 160 pour permettre le déplacement en translation du corps mobile 143 de la vanne de commande 140 associée.

Sur la figure 4, on a représenté de profil la came 160 montée sur l'arbre à came 151.

Cette came 160 présente ici un contour 161 particulier qui coopère au moins en partie avec l'extrémité libre 149 du corps mobile 143 de la vanne de commande 140 pour le déplacer en translation de manière fine et précise, selon l'axe de translation D1.

Plus particulièrement, la came 160 présente deux cercles virtuels E1, E2, de même centre C situé sur l'axe de rotation R1 de l'arbre à came 151, représentés par des pointillés sur la figure 4, entre lesquels s'inscrit le contour 161 de la came 160.

Un petit cercle E1 comprend un rayon N1 inférieur au rayon N2 du grand cercle E2.

Une première portion 162 du contour 161, de forme générale circulaire, se situe sur le petit cercle E1 ; et une deuxième portion 163 du contour 161 se situe sur le grand cercle E2.

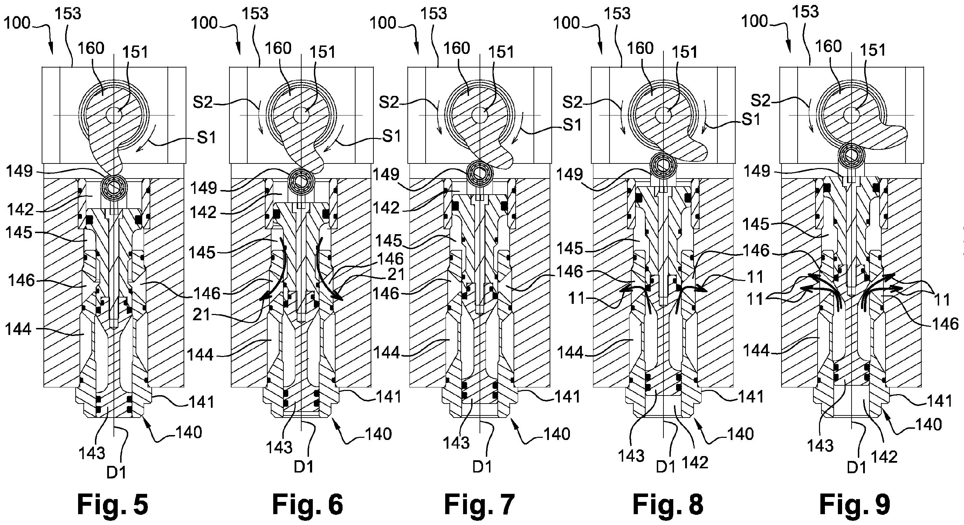

En l'occurrence, lorsque l'extrémité libre 149 du corps mobile 143 de la vanne de commande 140 est en contact avec la première portion 162, la deuxième buse de pulvérisation 133 est alimentée en eau sous pression avec un débit maximal, dite « portion de débit maximal 162 » (voir figure 9), tandis que lorsque l'extrémité libre 149 du corps mobile 143 de la vanne de commande 140 est en contact avec la deuxième portion 163, la deuxième buse de pulvérisation 133 ne pulvérise ni d'eau sous pression ni d'air sous pression (voir figure 5), dite « portion au repos 163 ».

La portion de débit maximal 162 du contour 161 de la came 160 s'étend ici sur un angle d'environ 270 degrés. La portion au repos 163 du contour 161 de la came 160 s'étend ici sur un angle de quelques degrés, ici cet angle est inférieur à 20 degrés.

Ces portions de débit maximal 162 et de repos 163 du contour 161 de la came 160 sont reliées, d'un côté, par une troisième portion 164 de contour 161, dite « portion de transition 164 », agencée de telle sorte qu'elle permet un déplacement en translation de l'extrémité libre 149 du corps mobile 143 de la vanne de commande 140, et, d'un autre côté, par une quatrième portion 165 de contour 161, dite « portion de butée 165 », qui forme les moyens de butée 165 pour l'extrémité libre 149 du corps mobile 143 de la vanne de commande 140.

Plus particulièrement, la portion de transition 164 est adaptée à déplacer en translation l'extrémité libre 149 du corps mobile 143 de la vanne de commande 140 sur une distance égale à la différence entre les valeurs des premier et deuxième rayons N1, N2.

Cette portion de transition 164 présente ici une forme courbe convexe.

Au cours de ce déplacement en translation, il est prévu d'effectuer une purge d'eau par de l'air sous pression pour permettre d'évacuer les gouttelettes d'eau encore présentes dans la deuxième buse de pulvérisation 133.

La distance précitée est ici comprise avantageusement entre 10 millimètres et 20 millimètres.

Le premier rayon N1 est ici compris avantageusement entre 10 millimètres et 20 millimètres, tandis que le deuxième rayon N2 est ici compris avantageusement entre 20 millimètres et 40 millimètres.

Cette portion de transition 164 du contour 161 de la came 160 s'étend sur un angle F1 égal ici à 68 degrés (voir figure 4), mais on pourrait envisager qu'elle s'étende sur un angle différent, par exemple un angle plus grand ou un angle plus petit en fonction notamment des moyens de contrôle de vitesse et des moyens de position de la rotation de l'arbre à came.

La portion de butée 165 présente ici au moins une tangente passant par le centre C de manière à bloquer la rotation de l'arbre à came(s) 151 ; 251 dans l'un des sens de rotation S1, S2.

En conclusion,
- lorsque l'extrémité libre 149 du corps mobile 143 de la vanne de commande 140 est en contact avec la portion de débit maximal 162 du contour 161 de la came 160, la vanne de commande 140 est dans une position autorisant l'eau sous pression et interdisant l'air sous pression (voir figure 9) ;
- lorsque l'extrémité libre 149 du corps mobile 143 de la vanne de commande 140 est en contact avec la portion de transition 164 du contour 161 de la came 160, la vanne de commande 140 effectue la purge de la deuxième buse de pulvérisation 133 par de l'air sous pression avant d'autoriser ou d'interdire l'alimentation en eau sous pression de cette deuxième buse de pulvérisation 133 (voir figures 6, 7 et 8) ; et
- lorsque l'extrémité libre 149 du corps mobile 143 de la vanne de commande 140 est en contact avec la portion de repos 163 du contour 161 de la came 160, la vanne de commande 140 est dans une position interdisant l'eau sous pression et l'air sous pression ; et la deuxième buse de pulvérisation 133 est dépourvue de gouttelettes d'eau grâce à la purge d'air (voir figure 5).

Sur les figures 6, 8 et 9, on a représenté respectivement par des flèches 11, 21 le chemin de l'eau sous pression ou de l'air sous pression à travers la deuxième buse de pulvérisation 133.

Sur les figures 5 et 6, on a représenté deux positions angulaires différentes de l'arbre à came 151. De la figure 5 à la figure 6, l'arbre à came 151 a été déplacé dans le deuxième sens de rotation S2 d'un angle de 16 degrés, ce qui représente ici un déplacement en translation de 3 millimètres de l'extrémité libre 149 du corps mobile 143 de la vanne de commande 140, correspondant à une ouverture de l'alimentation en air sous pression de la deuxième buse de pulvérisation 133.

Sur les figures 5 et 7, on a représenté deux positions angulaires différentes de l'arbre à came 151. De la figure 5 à la figure 7, l'arbre à came 151 a été déplacé dans le deuxième sens de rotation S2 d'un angle de 29 degrés, ce qui représente ici un déplacement en translation de 7 millimètres de l'extrémité libre 149 du corps mobile 143 de la vanne de commande 140, correspondant ici à une fermeture de l'alimentation en air sous pression de la deuxième buse de pulvérisation 133.

Sur les figures 5 et 8, on a représenté deux positions angulaires différentes de l'arbre à came 151. De la figure 5 à la figure 8, l'arbre à came 151 a été déplacé dans le deuxième sens de rotation S2 d'un angle de 44 degrés, ce qui représente ici un déplacement en translation de 11 millimètres de l'extrémité libre 149 du corps mobile 143 de la vanne de commande 140, correspondant ici à une ouverture de l'alimentation en eau sous pression de la deuxième buse de pulvérisation 133.

Sur les figures 5 et 9, on a représenté deux positions angulaires différentes de l'arbre à came 151. De la figure 5 à la figure 9, l'arbre à came 151 a été déplacé dans le deuxième sens de rotation S2 d'un angle de 68 degrés, ce qui représente ici un déplacement en translation de 16 millimètres de l'extrémité libre 149 du corps mobile 143 de la vanne de commande 140, correspondant ici à une pleine ouverture de l'alimentation en eau sous pression de la deuxième buse de pulvérisation 133.

Selon une variante de réalisation de celui représenté sur les figures 1 à 9, on pourrait envisager que l'actionneur soit dépourvu de moyens de contrôle de vitesse et de position.

En pratique, pour mettre en oeuvre une telle tête d'enneigement 100, on utilise un procédé de fonctionnement qui permet notamment d'assurer l'évacuation des gouttelettes d'eau de la deuxième buse de pulvérisation 133 après avoir interdit l'alimentation en eau sous pression de cette deuxième buse de pulvérisation 133 (voir figure 9), via la purge d'air sous pression.

Ainsi, le procédé de fonctionnement sera ici décrit plus en détails selon le premier sens de rotation S1, c'est-à-dire depuis un état correspondant à une pleine ouverture de l'alimentation en eau sous pression de la deuxième buse de pulvérisation 133 (voir figure 9), vers un état dans lequel la deuxième buse de pulvérisation 133 a été purgée d'eau par de l'air sous pression et n'est alimentée ni en eau sous pression ni en air sous pression (voir figure 5).

Ce procédé de fonctionnement comprend les étapes suivantes, pilotées automatiquement par les moyens de contrôle de vitesse et de contrôle de position du mouvement de rotation, selon lesquelles :
a) on pilote l'arbre à came 151 pour manoeuvrer la vanne de commande 140 dans une configuration autorisant l'alimentation en eau sous pression de la deuxième buse de pulvérisation 133 d'eau (voir figure 9),
b) on pilote l'arbre à came 151 dans le premier sens de rotation S1 pour manoeuvrer la vanne de commande 140 dans une configuration interdisant l'alimentation en eau sous pression de la deuxième buse de pulvérisation 133 (voir figures 8 et 7),
c) on pilote l'arbre à came 151 dans le premier sens de rotation S1 pour manoeuvrer la vanne de commande 140 dans une configuration autorisant l'alimentation en air sous pression de la deuxième buse de pulvérisation 133, de manière à assurer l'évacuation de l'eau de la deuxième buse de pulvérisation 133 (voir figures 7 et 6) par une purge d'air, puis
d) on pilote l'arbre à came 151 dans ledit premier sens de rotation S1 pour manoeuvrer la vanne de commande 140 dans une configuration interdisant l'alimentation en air sous pression de la deuxième buse de pulvérisation 133 (voir figures 6 et 5).

En d'autres termes, ces étapes a), b), c) puis d) correspondent ici à un déplacement de l'extrémité libre 149 du corps mobile 143 de la vanne de commande 140 sur la portion de transition 164 du contour 161 de la came 160 dans le premier sens de rotation S1.

Pour alimenter de nouveau en eau sous pression la deuxième buse de pulvérisation 133, on pilote l'arbre à came 151 dans le deuxième sens de rotation S2 de manière à réaliser les étapes d), c), b) puis a) (voir figures 5 à 9).

Le second mode de réalisation d'un dispositif conforme à l'invention est illustré en particulier sur les figures 10 à 21.

Selon ce deuxième mode de réalisation, le corps 201 du dispositif 200 comprend onze éléments de pulvérisation 230.

De manière analogue au premier mode de réalisation représenté sur les figures 1 à 9, le corps 201 de la tête d'enneigement 200 comprend, d'une part, trois dispositifs de nucléation 232 identiques ou similaires à ceux décrits précédemment, et, d'autre part, huit buses de pulvérisation 231, 233, 234, 235.

Les buses de pulvérisation 231, 233, 234, 235 sont réparties par paires, dans la branche supérieure 210 du corps 201 et de manière symétrique par rapport au plan A2-A2, cela sur quatre niveaux différents des conduits 10, 20 en eau sous pression et en air sous pression.

Deux buses de pulvérisation 231, les plus proches de l'extrémité supérieure libre de la branche supérieure 210, sont chacune alimentées directement en eau sous pression.

Les autres buses de pulvérisation 233, 234, 235 d'un même niveau sont alimentées en eau sous pression par l'intermédiaire d'une même vanne de commande 240.

Les différentes vannes de commande 240 sont également disposées chacune à des niveaux différents des conduits 10, 20 en eau sous pression et en air sous pression.

Ces vannes de commande 240 étant analogues à celles décrites précédemment dans le premier mode de réalisation représenté sur les figures 1 à 9, elles ne seront pas ici décrites en détails.

Comme le montrent les figures 11 et 12, ces vannes de commande 240 sont pilotées par un même arbre à cames 251 qui est manoeuvré en rotation par un actionneur unique 253 tel que décrit précédemment dans le cadre du premier mode de réalisation.

Ici, l'arbre à cames 251 est équipé de plusieurs cames 260, 270, 280, réparties sur sa hauteur, destinées chacune à piloter l'une des vannes de commande 240.

Ces cames 260, 270, 280 présentent chacune un contour 261, 271, 281 particulier, qui dépend avantageusement du nombre de cames agencées sur l'arbre à cames 251 et aussi de la séquence souhaitée d'alimentation en air ou en eau sous pression des buses de pulvérisations d'eau 233, 234, 235

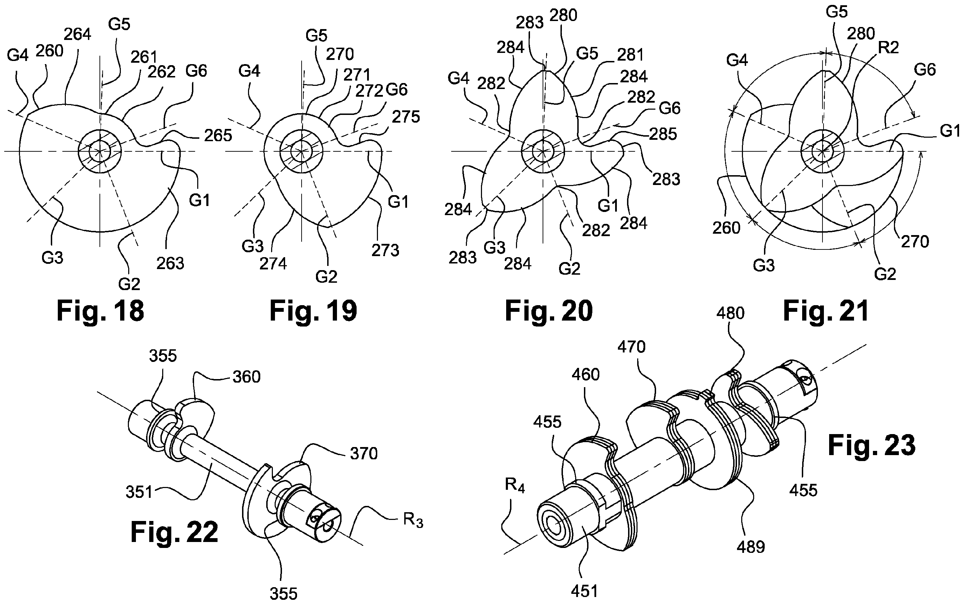

Le profil de ces trois cames 260, 270, 280 est ici tel que, pour au moins une position de l'arbre à cames 251, les vannes de commande 240 associées aux buses de pulvérisation d'eau 233, 234, 235 sont destinées à être dans des positions d'autorisation / interdiction d'alimentation en eau sous pression ou en air sous pression qui sont différentes pour chacune des buses de pulvérisation 233, 234, 235 associées, tel que représenté sur les figures 18 à 21.

Ainsi, le profil de chaque came 260, 270, 280 est prévu pour réaliser un séquençage particulier (ou cinématique particulière) permettant de contrôler la quantité d'eau sous pression alimentant chacune des buses de pulvérisation 233, 234, 235 et donc la production de neige de culture.

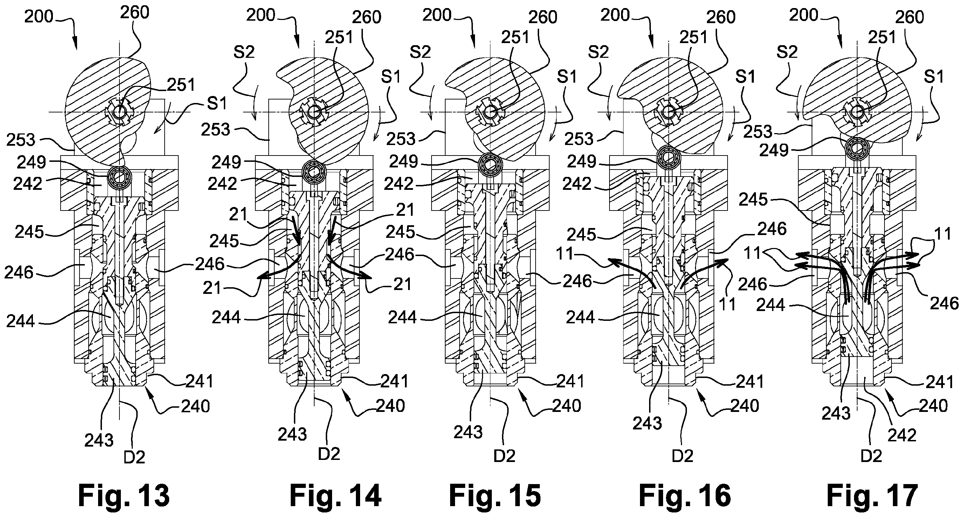

Sur les figures 13 à 17, on a représenté en coupe la tête d'enneigement 200 de la figure 10 selon le plan B2-B2, dans lesquelles la came 260 et la vanne de commande 240 associée sont, respectivement, dans des positions angulaires et des positions en translation différentes.

Les positions de l'extrémité libre 249 du corps mobile 243 de la vanne de commande 240 représentées sur les figures 13 à 17 sont ici identiques à celles de l'extrémité libre 149 du corps mobile 143 de la vanne de commande 240 représentées respectivement sur les figures 5 à 9.

Ici, seuls le contour 261 et les positions angulaires de la came 260 représentées sur les figures 13 à 17 sont différents.

Ainsi, la position angulaire de la came 260 de la figure 13 correspond à 0 degré, celle de la figure 14 correspond à 220 degrés, celle de la figure 15 correspond à 233 degrés, celle de la figure 16 correspond à 248 degrés et celle de la figure 17 correspond à 272 degrés.

Comme le montrent plus particulièrement les figures 18 à 21, chaque came 260, 270, 280 comprend ici, au moins sur son contour 261, 271, 281 les portions suivantes :
- la portion de débit maximal 262, 272, 282,
- la portion au repos 263, 273, 283,
- la portion de transition 264, 274, 284 et
- la portion de butée 265, 275, 285.

Les trois cames 260, 270, 280 représentées ici peuvent être dans six combinaisons différentes de production de neige de culture dans lesquelles les buses de pulvérisation 233, 234, 235 - soit pulvérisent de l'eau sous pression à un débit maximal, - soit ne sont pas alimentées en eau sous pression.

Ces combinaisons sont ici représentées chacune par des segments angulaires G1, G2, G3, G4, G5, G6 passant par l'axe de rotation R2 de l'arbre à cames 251 et séparés angulairement deux à deux de 68 degrés (excepté pour le passage du segment G6 à G1).

Plus particulièrement, la rotation de l'arbre à cames 251 permet d'amener, successivement et indépendamment, chacun des segments angulaires G1, G2, G3, G4, G5, G6 en regard des vannes de commande 240, avec :
- en G1, seules les buses de pulvérisation 231 alimentée en direct pulvérisent de l'eau sous pression (les buses de pulvérisation 233, 234, 235 ne sont pas alimentées en eau sous pression) ;
- en G2, deux paires de buses de pulvérisations 231, 233 pulvérisent de l'eau sous pression ;
- en G3, deux autres paires de buses de pulvérisations 231, 234 pulvérisent de l'eau sous pression ;

- en G4, les buses de pulvérisations 231, 233, 234 pulvérisent de l'eau sous pression ;
- en G5, les buses de pulvérisations 231, 234, 235 pulvérisent de l'eau sous pression ; et
- en G6, toutes les buses de pulvérisations 231, 233, 234, 235 pulvérisent de l'eau sous pression.

En pratique, pour mettre en oeuvre une telle tête d'enneigement 200, on utilise un procédé de fonctionnement analogue à celui décrit précédemment pour la tête d'enneigement représentée sur les figures 1 à 9.

Il est seulement nécessaire de piloter la rotation de l'arbre à cames 251 dans l'un des deux sens de rotation S1, S2 pour permettre de régler le nombre de buses de pulvérisation 233, 234, 235 à alimenter en eau sous pression de manière à produire la quantité de neige de culture souhaitée.

Sur les figures 22 et 23, on a représenté deux autres arbres à cames 351 ; 451 pour des têtes d'enneigement conformes à l'invention.

Ces arbres à came 351 ; 451 analogues à ceux décrits précédemment, se distinguent de ces derniers par le nombre de cames qu'ils comportent.

Sur la figure 22, l'arbre à cames 351 comprend uniquement deux cames 360, 370 présentant ici un profil particulier permettant une séquence de pilotage de l'alimentation en eau sous pression particulière des vannes de commande (non représentées).

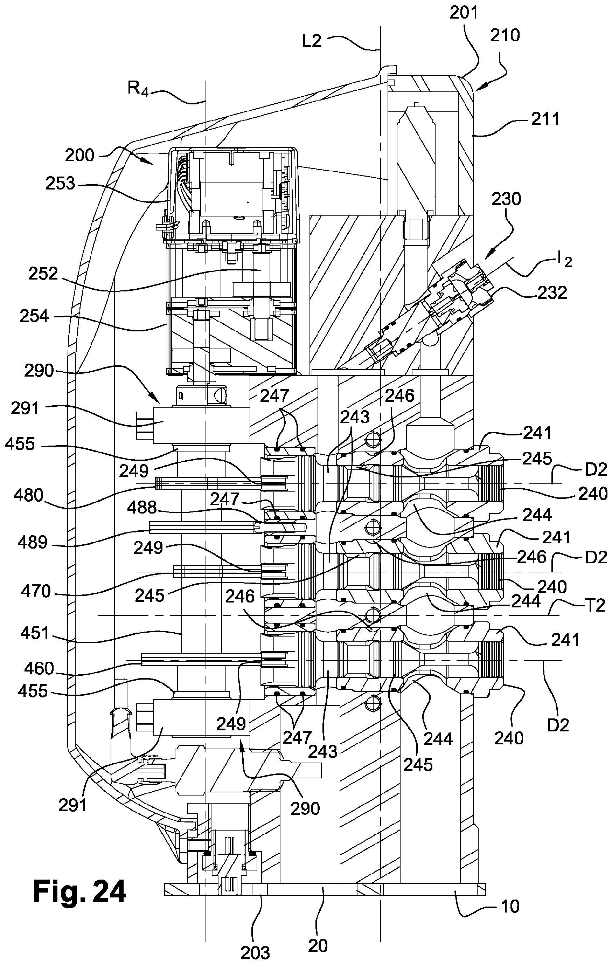

L'arbre à cames 451 représenté sur la figure 23, est quant à lui analogue à celui représenté sur la figure 12, notamment du fait qu'il comporte trois cames 460, 470, 480 pour le pilotage d'au moins trois vannes de commande 240 (voir figure 24).

Il s'en distingue uniquement par le fait qu'il comporte encore une came de butée 489, consistant ici en un disque muni d'un ergot radial sur sa périphérie.

Le dispositif recevant un tel arbre à cames 451, représenté sur la figure 24, est similaire à celui décrit ci-dessus en relation avec la figure 11. Par souci de simplification, les repères numériques employés pour la description de cette figure 11 seront ici conservés pour désigner les éléments structurels identiques ou similaires.

En particulier, comme représenté sur cette figure 24, la face arrière de la branche inférieure 220 de son corps 201, opposée à la face avant 211 et destinée à venir en regard de l'arbre à cames 451, comprend un élément de butée 488 fixe.

Cet élément de butée 488 s'étend en saillie de cette face arrière, en regard de la came de butée 489 précitée.

Cette came de butée 489 présente un profil qui permet de réaliser une butée mécanique en rotation pour l'arbre à cames 451, contre l'élément de butée 488 fixe, définissant ainsi les positions de fin de course en rotation.

Cet élément de butée 488 fixe consiste ici en une vis agencée dans la branche inférieure 220 du corps 201.

Comme on peut le voir sur les figures 3, 12, 22 et 23, les arbres à came(s) 151, 251, 351, 451 comportent chacun des moyens de blocage 155 ; 255 ; 355 ; 455 en translation selon leurs axes de rotation R1 ; R2 ; R3 ; R4 respectifs.

Ces moyens de blocage 155 ; 255 ; 355 ; 455 sont ici formés par deux disques 155 ; 255 ; 355 ; 455 qui présentent chacun un diamètre extérieur supérieur au diamètre de l'arbre à came(s) 151 ; 251 ; 351 ; 451, et, qui s'étendent autour de l'axe de rotation R1 ; R2 ; R3 ; R4 de l'arbre à came(s) 151 ; 251 ; 351 ; 451.

Entre ces deux disques 155 ; 255 ; 355 ; 455 d'un même arbre à came(s) 151, 251, 351, 451 sont agencées respectivement la ou les cames 160 ; 260, 270, 280 ; 360, 370 ; 460, 470, 480, 489 décrites précédemment.

Comme le montrent plus particulièrement les figures 2, 11 et 24, le corps 101 ; 201 de la tête d'enneigement 100 ; 200 comprend des moyens de maintien 190 ; 290 des moyens de pilotage 150 ; 250.

Ces moyens de maintien 190 ; 290 sont agencés sur une face arrière 112 ; 212 de la branche inférieure 120 ; 220 du corps 101 ; 201, opposée à la face avant 111 ; 211.

Ils présentent ici deux bras 191 ; 291 qui s'étendent depuis cette face arrière 112 ; 212 selon des axes parallèles à l'axe de translation D1, D2.

Comme le montrent plus particulièrement les figures 2 et 11, ces bras 191 ; 291 comportent chacun une ouverture d'accueil 192 ; 292 qui débouche de part et d'autre de chacun des bras 191 ; 291, et qui s'étend autour de l'axe de rotation R1, R2 de l'arbre à came(s) 151 ; 251.

Dans chacune de ces ouvertures d'accueil 192 ; 292 est prévu un roulement 193 ; 293 adapté ici à laisser libre en rotation l'arbre à came(s) 151 ; 251, par rapport au corps 101 ; 201 de la tête d'enneigement 100 ; 200, autour de son axe de rotation R1 ; R2.

Ces roulements 193 ; 293 forment également ici des butées coopérant avec les disques 155 ; 255 de l'arbre à came(s) pour bloquer l'arbre à came(s) 151 ; 251 en translation, selon l'axe de rotation R1 ; R2.

La présente invention n'est pas limitée aux modes de réalisation décrits et représentés, mais l'homme du métier saura y apporter toute variante conforme à son esprit.

On pourrait envisager un moteur unidirectionnel et une came dépourvue d'une portion de butée ou d'une came de butée.

On pourrait également envisager une came déplaçant en translation au moins une vanne de commande pour contrôler l'alimentation en air sous pression et/ou en eau sous pression d'au moins une buse de pulvérisation ou encore d'un dispositif de nucléation.

Selon une variante de réalisation non représentée, on pourrait également envisager, d'une part, des vannes de commande agencées à proximité de l'extrémité de la perche fixée dans le sol et, d'autre part, que ces vannes de commande soient pilotées chacune au moins par une came agencée sur un arbre à came(s) entrainé en rotation par un actionneur.

En outre, on pourrait envisager que la même came pilote deux vannes de commande différentes.

On obtient ainsi un dispositif pour la fabrication de neige de culture qui est de structure simple et qui permet de piloter très finement et très précisément la ou les vannes de commande d'une ou de plusieurs buses de pulvérisation.

On peut également facilement obtenir des combinaisons différentes de fonctionnement d'une pluralité de buses de pulvérisation.

## Revendications

1. Dispositif pour la fabrication de neige de culture, comprenant un corps (101 ; 201) comportant :
- un conduit (10) d'alimentation en eau sous pression
- un conduit (20) d'alimentation en air sous pression,
- au moins un élément de pulvérisation (130 ; 230) d'eau ou d'un mélange d'air et d'eau,
- au moins une vanne de commande (140 ; 240) pour le réglage de l'alimentation en eau sous pression et/ou en air sous pression dudit élément de pulvérisation (130 ; 230), et
- des moyens de pilotage (150 ; 250) destinés à piloter ladite vanne de commande (140 ; 240), lesquels moyens de pilotage (150 ; 250) comprennent un arbre à came(s) (151 ; 251 ; 351 ; 451) entrainé en rotation autour de son axe longitudinal (R1 ; R2 ; R3 ; R4) par un actionneur (153 ; 253),
ladite vanne de commande (140 ; 240) coopérant avec une came (160 ; 260, 270, 280 ; 360, 370 ; 460, 470, 480) portée par ledit arbre à came(s) (151 ; 251 ; 351 ; 451),
laquelle vanne de commande (140 ; 240) comprend un corps fixe (141 ; 241) en forme générale de tube délimitant un logement interne (142 ; 242) dans lequel est logé un corps mobile (142 ; 243), mobile en translation selon un axe de translation (D1, D2) s'étendant perpendiculairement audit axe longitudinal (R1, R2, R3, R4) dudit arbre à came(s) (151 ; 251 ; 351 ; 451),
**caractérisé en ce que** ladite vanne de commande (140 ; 240) est placée sur ledit conduit d'alimentation (10) en eau sous pression et sur ledit conduit (20) d'alimentation en air sous pression, et comporte sur une partie de son pourtour, au moins une chambre d'eau (144 ; 244) destinée à être alimentée en eau sous pression par ledit conduit d'alimentation (10) en eau sous pression, et, au moins une chambre d'air (145 ; 245) destinée à être alimentée en air sous pression par ledit conduit d'alimentation (20) en air sous pression.

2. Dispositif selon la revendication 1, **caractérisé en ce que** ledit corps (101 ; 201) comprend au moins deux vannes de commande (240) qui sont chacune disposées à des niveaux différents dudit conduit (20) d'alimentation en air sous pression et dudit conduit (10) d'alimentation en eau sous pression et, lesquelles vannes de commande (240) sont chacune pilotées par une came (260, 270, 280) agencée sur l'arbre à came(s) (251) desdits moyens de pilotage (250).

3. Dispositif selon l'une quelconque des revendications 1 ou 2, **caractérisé en ce qu'**il comporte au moins un élément de pulvérisation en forme de dispositif de nucléation (132 ; 232) alimenté en eau sous pression par ledit conduit (10) d'alimentation en eau sous pression et alimenté en air sous pression par ledit conduit (20) d'alimentation en air sous pression.

4. Dispositif selon l'une quelconque des revendications 1 à 3, **caractérisé en ce qu'**il comporte au moins un élément de pulvérisation en forme de buse de pulvérisation d'eau (133 ; 233 ; 234 ; 235).

5. Dispositif selon l'une quelconque des revendications 1 à 4, **caractérisé en ce qu'**il comporte au moins deux éléments de pulvérisation :
- l'un en forme de buse de pulvérisation d'eau (133 ; 233 ; 234 ; 235), et
- l'autre en forme de dispositif de nucléation (132 ; 232),
lequel dispositif de nucléation (132 ; 232) est disposé en aval de ladite buse de pulvérisation d'eau (133 ; 233 ; 234 ; 235), par rapport audit conduit (10) d'alimentation en eau sous pression, et au moins ladite buse de pulvérisation d'eau (133 ; 233 ; 234 ; 235) étant alimentée en eau ou en air par l'intermédiaire d'une vanne de commande (140, 240).

6. Dispositif selon l'une quelconque des revendications 1 à 5, dans lequel au moins l'une des cames (160 ; 260, 270, 280 ; 360, 370 ; 460, 470, 480) présente un profil tel que la vanne de commande (140 ; 240) avec laquelle ladite came coopère est mobile entre au moins deux positions :
- une position autorisant l'alimentation en eau sous pression et éventuellement en air sous pression dudit élément de pulvérisation (130 ; 230), et
- une position interdisant l'alimentation en eau sous pression et éventuellement en air sous pression dudit élément de pulvérisation (130 ; 230).

7. Dispositif selon la revendication 6, dans lequel ledit élément de pulvérisation (130 ; 230) comprend au moins une buse de pulvérisation d'eau (133 ; 233, 234, 235), les première et deuxième positions autorisant et interdisant respectivement l'alimentation en eau sous pression de ladite buse de pulvérisation d'eau (133 ; 233, 234, 235), et dans lequel ladite came (160 ; 260, 270, 280 ; 360, 370 ; 460, 470, 480) présente un profil tel que ladite vanne de commande (140 ; 240) avec laquelle elle coopère est mobile jusqu'à une troisième position, différente desdites première et deuxième positions, autorisant l'alimentation en air sous pression de ladite buse de pulvérisation d'eau (133 ; 233, 234, 235).

8. Dispositif selon la revendication 7, dans lequel le profil d'au moins deux cames (260, 270, 280) est tel que les vannes de commande (240) associées aux buses de pulvérisation d'eau (233, 234, 235), sont adaptées, pour une même position de l'arbre à came(s) (251), à être dans des positions différentes entre elles.

9. Dispositif selon l'une quelconque des revendications 1 à 8, **caractérisé en ce qu'**il comporte au moins une vanne de commande (140, 240) agencée pour permettre une purge d'eau de l'une au moins des buses de pulvérisation d'eau (133 ; 233 ; 234 ; 235) par de l'air sous pression provenant dudit conduit (20) d'alimentation en air sous pression.

10. Dispositif selon l'une quelconque des revendications 1 à 9, dans lequel le corps (101 ; 201) comprend des moyens de rappel (145 ; 245) de chaque vanne de commande (140 ; 240) vers une position dans laquelle une extrémité libre (149 ; 249) de chacune desdites vannes de commande (140 ; 240), en regard de ladite came (160 ; 260, 270, 280 ; 360, 370 ; 460, 470, 480), assure un appui contre ladite came (160 ; 260, 270, 280 ; 360, 370 ; 460, 470, 480) en regard.

11. Dispositif selon la revendication 10, dans lequel les moyens de rappel (145 ; 245) sont formés par l'air sous pression circulant dans ledit conduit d'alimentation (20) en air sous pression, par exemple une alimentation d'air d'un dispositif de nucléation (132 ; 232).

12. Dispositif selon l'une des revendications 1 à 11, dans lequel l'actionneur (153 ; 253) comprend un moteur (153 ; 253) bidirectionnel qui entraine en rotation ledit arbre à came(s) (151 ; 251; 351; 451), lequel moteur (153 ; 253) est associé à des moyens de contrôle de vitesse et de contrôle de position de l'arbre à came(s) (151 ; 251; 351; 451).

13. Installation d'enneigement qui comprend une perche, et un dispositif (100 ; 200) selon l'une des revendications 1 à 12, dans laquelle ledit dispositif (100 ; 200) est agencé à une extrémité libre de ladite perche.

14. Procédé de fonctionnement d'un dispositif (100 ; 200) selon l'une des revendications 1 à 12 ou d'une installation selon la revendication 13 équipée dudit dispositif (100 ; 200), l'élément de pulvérisation (130 ; 230) comprenant au moins une buse de pulvérisation d'eau (133 ; 233, 234, 235), ledit procédé de fonctionnement comprenant les étapes selon lesquelles :
a) on pilote ledit arbre à came(s) (151 ; 251; 351; 451) pour autoriser l'alimentation en eau sous pression de ladite buse de pulvérisation d'eau (133 ; 233, 234, 235) via ladite vanne de commande (140 ; 240) associée,
b) on pilote ledit arbre à came(s) (151 ; 251; 351; 451) dans un premier sens de rotation (S1) pour interdire l'alimentation en eau sous pression de ladite buse de pulvérisation d'eau (133 ; 233, 234, 235),
c) on pilote ledit arbre à came(s) (151 ; 251; 351; 451) dans ledit premier sens de rotation (S1) pour autoriser l'alimentation en air sous pression de ladite buse de pulvérisation d'eau (133 ; 233, 234, 235) de manière à assurer l'évacuation de l'eau sous pression de ladite buse de pulvérisation d'eau (133 ; 233, 234, 235), puis
d) on pilote ledit arbre à came(s) (151 ; 251; 351; 451) dans ledit premier sens de rotation (S1) pour interdire l'alimentation en air sous pression de ladite buse de pulvérisation d'eau (133 ; 233, 234, 235).

15. Procédé de fonctionnement selon la revendication 14, qui comprend l'étape additionnelle selon laquelle :
e) on pilote ledit arbre à came(s) (151 ; 251; 351; 451) dans un deuxième sens de rotation (S2), opposé audit premier sens de rotation (S1), de manière à réaliser les étapes successives d), c), b) puis a).

## Patentansprüche

1. Vorrichtung zur Erzeugung von Kunstschnee mit einem Körper (101; 201), der
- eine Leitung (10) zur Versorgung mit Druckwasser,
- eine Leitung (20) zur Versorgung mit Druckluft,
- wenigstens ein Element (130; 230) zum Zerstäuben von Wasser oder einer Mischung aus Luft und Wasser,
- wenigstens ein Steuerventil (140; 240) zum Regeln der Versorgung des Zerstäubungselements (130; 230) mit Druckwasser und/oder Druckluft und
- Steuermittel (150; 250), die dazu bestimmt sind, das Steuerventil (140; 240) zu steuern, wobei die Steuermittel (150; 250) eine Nockenwelle (151; 251; 351; 451) aufweisen, die durch ein Betätigungsmittel (153; 253) um ihre Längsachse (R1; R2; R3; R4) drehend angetrieben wird,
aufweist,
wobei das Steuerventil (140; 240) mit einem von der Nockenwelle (151; 251; 351; 451) getragenen Nocken (160; 260, 270, 280; 360, 370; 460, 470, 480) zusammenwirkt,
wobei das Steuerventil (140; 240) einen festen Körper (141; 241) in der allgemeinen Form eines Rohrs aufweist, das einen inneren Raum (142; 242) begrenzt, in dem ein beweglicher Körper (143; 243) untergebracht ist, der entlang einer Translationsachse (D1, D2), die sich senkrecht zur Längsachse (R1, R2, R3, R4) der Nockenwelle (151; 251; 351; 451) erstreckt, bewegbar ist,
**dadurch gekennzeichnet, daß** das Steuerventil (140; 240) auf der Leitung (10) zur Versorgung mit Druckwasser und auf der Leitung (20) zur Versorgung mit Druckluft angeordnet ist und auf einem Teil seines Umfangs wenigstens eine Wasserkammer (144; 244), die dazu bestimmt ist, durch die Leitung (10) zur Versorgung mit Druckwasser mit Druckwasser versorgt zu werden, und wenigstens eine Luftkammer (145; 245), die dazu bestimmt ist, durch die Leitung (20) zur Versorgung mit Druckluft mit Druckluft versorgt zu werden, aufweist.

2. Vorrichtung gemäß Anspruch 1, **dadurch gekennzeichnet, daß** der besagte Körper (101; 201) wenigstens zwei Steuerventile (240) aufweist, die jeweils an verschiedenen Stellen der Leitung (20) zur Versorgung mit Druckluft und der Leitung (10) zur Versorgung mit Druckwasser angeordnet sind, und daß die Steuerventile (240) jeweils durch eine auf der Nockenwelle (251) der Steuermittel (250) angeordnete Nocke (260, 270, 280) gesteuert werden.

3. Vorrichtung gemäß einem der Ansprüche 1 oder 2, **dadurch gekennzeichnet, daß** sie wenigstens ein Zerstäubungselement in Form einer Kristallisationskeimbildungsvorrichtung (132; 232) aufweist, die durch die Leitung (10) zur Versorgung mit Druckwasser mit Druckwasser und durch die Leitung (20) zur Versorgung mit Druckluft mit Druckluft versorgt wird.

4. Vorrichtung gemäß einem der Ansprüche 1 bis 3, **dadurch gekennzeichnet, daß** sie wenigstens ein Zerstäubungselement in Form einer Wasserzerstäubungsdüse (133; 233; 234; 235) aufweist.

5. Vorrichtung gemäß einem der Ansprüche 1 bis 4, **dadurch gekennzeichnet, daß** sie wenigstens zwei Zerstäubungselemente aufweist:
- eins in Form einer Wasserzerstäubungsdüse (133; 233; 234; 235) und
- eins in Form einer Kristallisationskeimbildungsvorrichtung (132; 232),
wobei die Kristallisationskeimbildungsvorrichtung (132; 232) in Bezug auf die Leitung (10) zur Versorgung mit Druckwasser nach der Wasserzerstäubungsdüse (133; 233; 234; 235) angeordnet ist und die wenigstens eine Wasserzerstäubungsdüse (133; 233; 234; 235) mittels eines Steuerventils (140, 240) mit Wasser oder mit Luft versorgt wird.

6. Vorrichtung gemäß einem der Ansprüche 1 bis 5, bei der wenigstens einer der Nocken (160; 260, 270, 280; 360, 370; 460, 470, 480) ein Profil dergestalt aufweist, daß das Steuerventil (140; 240), mit dem der Nocken zusammenwirkt, zwischen wenigstens zwei Positionen bewegbar ist:
- einer Position, die eine Versorgung des Zerstäubungselements (130; 230) mit Druckwasser und eventuell mit Druckluft ermöglicht, und
- einer Position, die eine Versorgung des Zerstäubungselements (130; 230) mit Druckwasser und eventuell mit Druckluft unterbindet.

7. Vorrichtung gemäß Anspruch 6, bei der das Zerstäubungselement (130; 230) wenigstens eine Wasserzerstäubungsdüse (133; 233, 234, 235) aufweist, wobei die erste und die zweite Position die Versorgung der Wasserzerstäubungsdüse (133; 233, 234, 235) mit Druckwasser ermöglichen bzw. unterbinden, und bei der der der Nocken (160; 260, 270, 280; 360, 370; 460, 470, 480) ein Profil dergestalt aufweist, daß das Steuerventil (140; 240), mit dem der Nocken zusammenwirkt, bis in eine von der ersten und der zweiten Position verschiedene dritte Positionen bewegbar ist, die eine Versorgung der Wasserzerstäubungsdüse (133; 233, 234, 235) mit Druckluft ermöglicht.

8. Vorrichtung gemäß Anspruch 7, bei der das Profil wenigstens zweier Nocken (260, 270, 280) dergestalt ist, daß die den Wasserzerstäubungsdüsen (233, 234, 235) zugeordneten Steuerventile (240) dazu ausgelegt sind, sich bei einer gleichen Stellung der Nockenwelle (251) in voneinander unterschiedlichen Positionen zu befinden.

9. Vorrichtung gemäß einem der Ansprüche 1 bis 8, **dadurch gekennzeichnet, daß** sie wenigstens ein Steuerventil (140, 240) aufweist, das dazu ausgelegt ist, eine Entwässerung wenigstens einer der Zerstäubungsdüsen (133; 233; 234; 235) durch die von der Leitung (20) zur Versorgung mit Druckluft kommenden Druckluft zu ermöglichen.

10. Vorrichtung gemäß einem der Ansprüche 1 bis 9, bei der der Körper (101; 201) Mittel (145; 245) zum Rückstellen jedes Steuerventils (140; 240) in eine Position, in der ein freies Ende (149; 249) jedes der Steuerventile (140; 240), das dem Nocken (160; 260, 270, 280; 360, 370; 460, 470, 480) gegenübersteht, einen Andruck an den gegenüberliegenden Nocken (160; 260, 270, 280; 360, 370; 460, 470, 480) sicherstellt, aufweist.

11. Vorrichtung gemäß Anspruch 10, bei der die Rückstellmittel (145; 245) durch in der Leitung (20) zur Versorgung mit Druckluft fließende Druckluft, zum Beispiel eine Versorgung einer Kristallisationskeimbildungsvorrichtung (132; 232) mit Luft, gebildet sind.

12. Vorrichtung gemäß einem der Ansprüche 1 bis 11, bei der das Betätigungsmittel (153; 253) einen Zweirichtungsmotor (153; 253) aufweist, der die Nockenwelle (151; 251; 351; 451) drehend antreibt, wobei der Motor (153; 253) Mitteln zum Steuern der Geschwindigkeit und zum Steuern der Position der Nockenwelle (151; 251; 351; 451) zugeordnet ist.

13. Schneedeckenanlage, die eine Lanze und eine Vorrichtung (100; 200) gemäß einem der Ansprüche 1 bis 12 aufweist, bei der die Vorrichtung (100; 200) an einem freien Ende der Lanze angeordnet ist.

14. Verfahren zum Betreiben einer Vorrichtung (100; 200) gemäß einem der Ansprüche 1 bis 12 oder einer mit einer Vorrichtung (100; 200) ausgestatteten Anlage gemäß Anspruch 13, wobei das Zerstäubungselement (130; 230) wenigstens eine Wasserzerstäubungsdüse (133; 233, 234, 235) aufweist, wobei das Betriebsverfahren die Schritte aufweist, gemäß denen
a) man die Nockenwelle (151; 251; 351; 451) steuert, um eine Versorgung der Wasserzerstäubungsdüse (133; 233, 234, 235) mit Druckwasser über das Steuerventil (140; 240) zu ermöglichen,
b) man die Nockenwelle (151; 251; 351; 451) in einer ersten Drehrichtung (S1) steuert, um die Versorgung der Wasserzerstäubungsdüse (133; 233, 234, 235) mit Druckwasser zu unterbinden,
c) man die Nockenwelle (151; 251; 351; 451) in der ersten Drehrichtung (S1) steuert, um die Versorgung der Wasserzerstäubungsdüse (133; 233, 234, 235) mit Druckluft zu ermöglichen, um ein Entfernen des Druckwassers aus der Wasserzerstäubungsdüse (133; 233, 234, 235) sicherzustellen, und
d) man die Nockenwelle (151; 251; 351; 451) in der ersten Drehrichtung (S1) steuert, um die Versorgung der Wasserzerstäubungsdüse (133; 233, 234, 235) mit Druckluft zu unterbinden.

15. Betriebsverfahren gemäß Anspruch 14, das den zusätzlichen Schritt aufweist, gemäß dem
e) man die Nockenwelle (151; 251; 351; 451) in einer der ersten Drehrichtung (S1) entgegengesetzten zweiten Drehrichtung (S2) steuert, um die aufeinanderfolgenden Schritte d), c), b) und dann a) auszuführen.

## Claims

1. A culture snow making device, comprising a body (101; 201) including:
- a pressurised water supply duct (10),
- a pressurised air supply duct (20),
- at least one element (130; 230) for spaying water or a mixture of air and water,
- at least one control valve (140; 240) adjusting the supply of pressurised water and/or pressurised air to said spray element (130; 230), and
- piloting means (150; 250) intended to pilot said control valve (140; 240), which piloting means (150; 250) comprise a camshaft (151; 251; 351; 451) driven into rotation about its longitudinal axis (R1; R2; R3; R4) by an actuator (153; 253),
said control valve (140; 240) cooperating with a cam (160; 260, 270, 280; 360, 370; 460, 470, 480) carried by said camshaft (151; 251; 351; 451),
which control valve (140; 240) comprises a fixed body (141; 241), generally tubular in shape, delimiting an inner housing (142; 242) in which is accommodated a mobile body (142; 243), translationally mobile along a translation axis (D1, D2) extending perpendicular with respect to said longitudinal axis (R1, R2, R3, R4) of said camshaft (151; 251; 351; 451),
**characterized in that** said control valve (140; 240) is placed on said pressurised water supply duct (10) and on said pressurised air supply duct (20), and includes, over a part on its perimeter, at least one water chamber (144; 244) intended to be supplied with pressurised water via said pressurised water supply duct (10), and, at least one air chamber (145; 245) intended to be supplied with pressurised air via said pressurised air supply duct (20).

2. The device according to claim 1, **characterized in that** said body (101; 201) comprises at least two control valves (240) that are each arranged at different levels of said pressurised air supply duct (20) and said pressurised water supply duct (10) and, which control valves (240) are each piloted by a cam (260, 270, 280) arranged on the camshaft (251) of said piloting means (250).

3. The device according to any one of claims 1 or 2, **characterized in that** it includes at least one spray element in the form of a nucleation device (132. 232) supplied with pressurised water via said pressurised water supply duct (10) and supplied with pressurised air via said pressurised air supply duct (20).

4. The device according to any one of claims 1 to 3, **characterized in that** it includes at least one spray element in the form of a water spray nozzle (133; 233; 234; 235).

5. The device according to any one of claims 1 to 4, **characterized in that** it includes at least two spray elements:
- the one in the form of a water spray nozzle (133; 233; 234; 235), and
- the other in the form of a nucleation device (132; 232), which nucleation device (132; 232) is arranged downstream of said water spray nozzle (133; 233; 234; 235), with respect to said pressurised water supply duct (10), and at least said water spray nozzle (133; 233; 234; 235) being supplied with water or air through a control valve (140; 240).

6. The device according to any one of claims 1 to 5, wherein at least one of the cams (160; 260, 270, 280; 360, 370; 460, 470, 480) has such a profile that the control valve (140; 240) with which said cam cooperates is mobile between at least two positions:
- a position allowing the supply of pressurised water and possibly of pressurised air to said spray element (130; 230), and
- a position inhibiting the supply of pressurised water and possibly of pressurised air to said spray element (130; 230).

7. The device according to claim 6, wherein said spray element (130; 230) comprises at least one water spray nozzle (133; 233, 234, 235), the first and second positions allowing and inhibiting respectively the supply of pressurised water to said water spray nozzle (133; 233, 234, 235), and wherein said cam (160; 260, 270, 280; 360, 370; 460, 470, 480) has such a profile that said control valve (140; 240) with which it cooperates is mobile up to a third position, different from said first and second positions, allowing the supply of pressurised air to said water spray nozzle (133; 233, 234, 235).

8. The device according to claim 7, wherein the profile of at least two cams (260, 270, 280) is such that the control valves (240) associated with the water spray nozzles (233, 234, 235), are adapted, for a same position of the camshaft (251), to be in positions that are different from each other.

9. The device according to any one of claims 1 to 8, **characterized in that** it includes at least one control valve (140, 240) adapted to allow a draining of water from at least one of the water spray nozzles (133; 233; 234; 235) by pressurised air coming from said pressurised air supply duct (20).

10. The device according to any one of claims 1 to 9, wherein the body (101; 201) comprises means (145; 245) for returning each control valve (140; 240) to a position in which a free end (149; 249) of each of said control valves (140; 240), opposite to said cam (160; 260, 270, 280; 360, 370; 460, 470, 480), ensures a bearing against said opposite cam (160; 260, 270, 280; 360, 370; 460, 470, 480).

11. The device according to claim 10, wherein the return means (145; 245) are formed by the pressurised air circulating in said pressurised air supply duct (20), for example an air supply of a nucleation device (132; 232).

12. The device according to one of claims 1 to 11, wherein the actuator (153; 253) comprises a bidirectional motor (153; 253) that drives said camshaft (151; 251, 351; 451) into rotation, which motor (153; 253) is associated with means for controlling the speed and controlling the position of the camshaft (151; 251; 351; 451).

13. A snowing machinery that comprises a pole, and a device (100; 200) according to one of claims 1 to 12, wherein said device (100; 200) is arranged at a free end of said pole.

14. An operating method of a device (100; 200) according to one of claims 1 to 12 or of a machinery according to claim 13, equipped with said device (100; 200), the spray element (130; 230) comprising at least one water spray nozzle (133; 233, 234, 235), said operating method comprising the following steps:
a) piloting said camshaft (151; 251; 351; 451) to allow the supply of pressurized water to said water spray nozzle (133; 233, 234, 235) via said associated control valve (140; 240),
b) piloting said camshaft (151; 251; 351; 451) in a first direction of rotation (S1) to inhibit the supply of pressurized water to said water spray nozzle (133; 233, 234, 235),
c) piloting said camshaft (151; 251; 351; 451) in said first direction of rotation (S1) to allow the supply of pressurized air to said water spray nozzle (133; 233, 234, 234), so as to ensure the evacuation of the pressurized water from said water spray nozzle (133; 233, 234, 235), then
d) piloting said camshaft (151; 251; 351; 451) in said first direction of rotation (S1) to inhibit the supply of pressurised air to said water spray nozzle (133; 233, 234, 235).

15. The operating method according to claim 14, that comprises the additional step of:
e) piloting said camshaft (151; 251; 351; 451) in a second direction of rotation (S2), opposite to said first direction of rotation (S1), so as to perform the successive steps d), c), b) then a).
